# EUROPEAN PATENT SPECIFICATION

(11) **EP 2 067 272 B1**
(45) Date of publication and mention of the grant of the patent: **25.08.2010**
(21) Application number: 07837525.0
(22) Date of filing: 28.08.2007
(51) Int. Cl.: H04B 5/02, G06K 7/00, H01Q 1/22, G06K 7/08

(54) **RADIO FREQUENCY IDENTIFICATION (RFID) SYSTEM FOR ITEM LEVEL INVENTORY**
RADIOFREQUENZIDENTIFIKATIONS (RFID)-SYSTEM FÜR INVENTUR AUF OBJEKTEBENE
SYSTÈME D'IDENTIFICATION PAR RADIOFRÉQUENCE (RFID) POUR INVENTAIRE AU NIVEAU ARTICLE

(30) Priority: 13.09.2006 US 520123
(43) Date of publication of application: 10.06.2009
(73) Proprietor: Sensormatic Electronics Corporation, Boca Raton, Florida 33487 (US)
(72) Inventor: ALEXIS, Mark, Wellington, FL 33414 (US); SHAFER, Gary, Mark, Charlotte, NC 28277 (US)
(74) Representative: Hafner, Dieter
(86) International application number: PCT/US2007/019070
(87) International publication number: WO 2008/033223

(56) References cited:
- FR-A- 2 879 831
- US-A1- 2002 044 096
- US-A1- 2006 017 634

## Description

### BACKGROUND OF THE INVENTION

### Field of the Invention

This invention relates generally to radio frequency identification (RFID) systems, and more particularly, to RFID systems that acquire information from each of a plurality of items.

### Description of the Related Art

Radio frequency identification (RFID) systems are used in many different applications including for example, in retail environments to obtain information relating to items tagged with RFID identifiers. For example, an RFID tag can be attached or integrated within a product or product packaging. Using an RFID interrogator, which may be a fixed, portable or handheld device, RFID tags within the interrogation zone of the interrogator may be activated and provide information regarding the item associated with the RFID tag (e.g., product descriptor, serial number, location, etc.). These RFID tags receive and respond to radio frequency (RF) signals to provide information, for example, related to the product to which the RFID tag is attached. Such information may include inventory information relating to items on a shelf or items in a warehouse. In general, modulators of the RFID tags may transmit back a signal using a transmitter or reflect back a signal to the RFID readers. Additionally, information may be communicated to the RFID tags (e.g., encoding information) using RFID encoders. Thus, RFID systems may be used to monitor the inventory of products in a retail environment and provide product identification using the storage and remote retrieval of data using RFID tags or transponders.

RFID systems include RFID readers that can detect and receive information from a large number of RFID tags at the same time. Additionally, RFID readers can transmit and receive at the same time on the same frequency. For example, in a retail environment using an RFID system to track inventory, it is known to provide numerous read points that each include the use of RF multiplexers and numerous cables to connect to each read point. Further, in such known systems a separate communication and control system is typically needed to manage and control the RF multiplexers. Thus, the cost and complexity of these RFID systems is typically high. Further, the time and complexity to install the components also may be high, for example, when having to install bulky cable harnesses, etc. Also, it is often difficult, if not impossible, to obtain a complete inventory of, for example, a complete pallet because of the material used to package the contents. For example, metal foil or metalized plastic films and/or RF absorbent material may be and are commonly used in the packaging of pharmaceuticals and food products. This packaging can shield the passive RFID tags attached to the products within the packaging. Thus, often only the outer layer of RFID tags can be read using the known RFID systems. Accordingly, the breaking or opening of the pallet or case is often needed to examine the contents and confirm the inventory.

It is also known to use multiple RFID interrogators in such systems to monitor RFID tags in different locations. The use of multiple RFID interrogators also adds cost and complexity to the system.

US 2006/0017634 Al teaches a radio frequency identification RFID system comprising an RFID interrogator, at least one local antenna configured to communicate with RFID tags and a multiplexer connected to at least one local antenna. This antenna array for RFID antennas for large cohesive detection spaces has an operating frequency between 100 kHz and 30 MHz.

### BRIEF DESCRIPTION OF THE INVENTION

A radio frequency identification (RFID) system may be provided and may include an RFID interrogator, at least one interrogator antenna and at least one local antenna configured to communicate with RFID tags. The RFID system further may include a multiplexer connected to the at least one local antenna and configured to receive power from an RF signal generated by the RPID interrogator and transmitted wirelessly from the interrogator antenna.

A radio frequency identification (RFID) interface device may be provided that may include a plurality of multiplexers and a plurality of local antennas connected to the plurality of multiplexers and configured to communicate with RFID tags. The RFID interface device also may include a movable main antenna in connection with the plurality of local antennas and configured to receive RF power from an interrogator to power the plurality of multiplexers.

A radio frequency identification (RFID) system may be provided that may include at least one multiplexer configured to appear to an RFID interrogator as a passive RFID tag and configured to receive power from an RF signal of the RFID interrogator. The RFID system also may include a multiplexed antenna array configured to communicate with a plurality of RFID tags with each of the antennas in the multiplexed array configured to be selectively activated by the at least one multiplexer.

### BRIEF DESCRIPTION OF THE DRAWINGS

For a better understanding of various embodiments of the invention, reference should be made to the following detailed description that should be read in conjunction with the following figures wherein like numerals represent like parts.
Figure 1 is a block diagram of an RFID system constructed in accordance with an embodiment of the invention.
Figure 2 is a block diagram of an RFID system constructed in accordance with another embodiment of the invention.
Figure 3 is a block diagram of an RFID tag constructed in accordance with an embodiment of the invention.
Figure 4 is a block diagram of an RFID tag constructed in accordance with another embodiment of the invention.
Figure 5 is a block diagram of an RFID communication system constructed in accordance with an embodiment of the invention.
Figure 6 is an elevation view of an RFID shelf inventory system constructed in accordance with an embodiment of the invention.
Figure 7 is a block diagram of an interface device constructed in accordance with an embodiment of the invention.
Figure 8 is a perspective view of a pallet inventory system constructed in accordance with an embodiment of the invention.
Figure 9 is a plan view of a pallet inventory system constructed in accordance with an embodiment of the invention.

### DETAILED DESCRIPTION OF THE INVENTION

For simplicity and ease of explanation, the invention will be described herein in connection with various embodiments thereof. Those skilled in the art will recognize, however, that the features and advantages of the various embodiments may be implemented in a variety of configurations. It is to be understood, therefore, that the embodiments described herein are presented by way of illustration, not of limitation.

In general, various embodiments of the invention provide a system for communicating with and obtaining information using radio frequency identification (RFID). For example, the various embodiments may provide a system for obtaining real time inventories of items tagged with RFID identifiers.

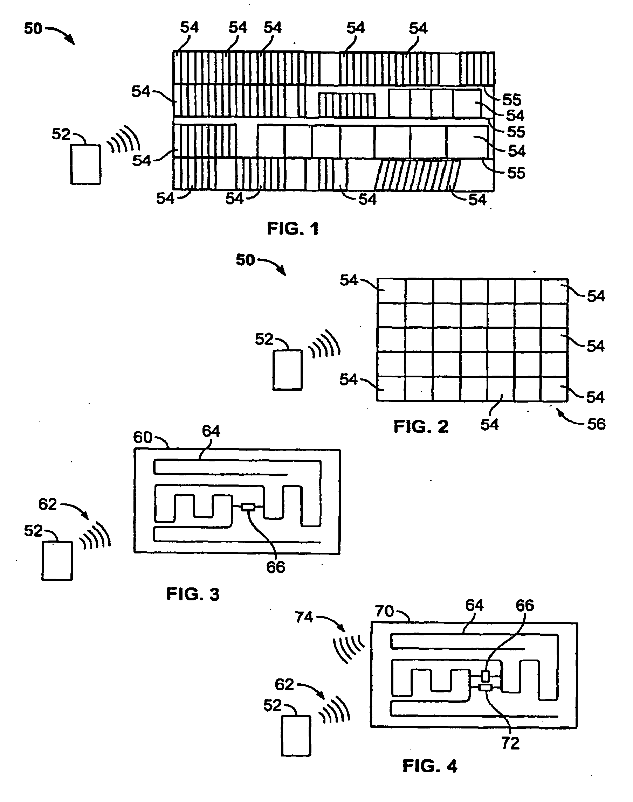

Specifically, and referring to Figures 1 and 2, various embodiments of the invention may be implemented in connection with different types of RFID systems, including, for example an RFID system 50. The RFID system 50 may include an RFID communication device, such as an RFID reader or interrogator 52 (which optionally also may include an RFID encoder) and a plurality of identification devices (not shown), for example, a plurality of RFID tags connected to or integrated with different objects 54 (e.g., DVDs or CDs) and may be supported by support structures, for example, a plurality of shelves 55 (e.g., movable shelves on peg board). The RFID interrogator 52 and RFID tags may communicate via radio frequency (RF) and generally operate in accordance with known RFID communication methods. For example, as shown in Figure 1, the objects 54 may be supported on the plurality of shelves 55 with each object 54 having attached thereto or integrated therewith one or more RFID tags as is known. For example, the objects 54 may be products, such as retail products and the plurality of shelves 55 may form a display for displaying the objects 54. It should be noted that the objects 54 may be of different size and shape. Additionally, the objects 54 may be constructed of different materials with the RFID tags located on the outside or within the product or product packaging as is known.

As another example, as shown in Figure 2, a plurality of objects 54 may be located within a support structure 56. For example, the plurality of objects 54 may be boxes or cases and the support structure 56 a crate/pallet or similar structure for transporting the structure (e.g., a plurality of pharmaceutical containers within one or more pallets). The RFID interrogator 52 may be used to communicate with RFID tags connected to the objects 54 while the support structure 56 is stationary or in motion.

In various embodiments, RFID tags 60 may be passive radio reflective identification tags or passive RFID tags as shown in Figure 3. The passive RFID tags 60 do not include a battery or other power source and when radio waves 62 from the RFID interrogator 52 are detected by an antenna 64 of the RFID tag 60, the energy is converted by the antenna 64 into electricity that can power up, for example, a processor, such as a microchip 66 in the RFID tag 60. The RFID tag 60 is then able to communicate, and more particularly, transmit to the RFID reader 52 information stored in the microchip 66. For example, the information transmitted may include the type of object to which the RFID tag 60 is connected, including, for example, a serial number, the time and date of the transmission, the location of the RFID tag 60 transmitting the information, etc. and which is generally referred to herein as RFID tag information.

In other various embodiments, RFID tags 70 may be active radio reflective identification tags or active RFID tags as shown in Figure 4. The active RFID tags 70 also include a transmitter 72 to communicate, and more particularly, transmit (as opposed to reflecting back) signals 74 to the RFID reader 52 having the RFID tag information. The active RFID tags 70 use a battery (not shown) or other power source (e.g., optically powered) to transmit the signals 74 to the RFID reader 52.

It should be noted that the objects 54 shown in Figures 1 and 2, or other objects may include only active RFID tags, only passive RFID tags or a combination of active and passive RFID tags. A determination of which type of RFID tag to use may be based on the particular application, for example, the distance over which the RFID tags must be detected (e.g., long distance versus short distance). This may determined, for example, based on the type of products and location of the products having the RFID system implemented in connection therewith.

It should be noted that the RFID interrogator 52 may be a stand alone unit, for example, a portable or handheld unit or may be integrated with another communication device, such as mobile or cellular telephones, personal digital assistants (PDAs), Blackberry devices, etc. Alternatively, the RFID interrogator 52 may be formed as part of a backplane as described in detail below. Further, components within, for example, a cellular telephone, such as the transceiver, processor and/or software may be modified to provide the same functionality and operation of the RFID interrogator 52. Still other alternatives include a plug-in or add-on unit, such as, a plug-in module for a PDA that includes therein the RFID interrogator 52.

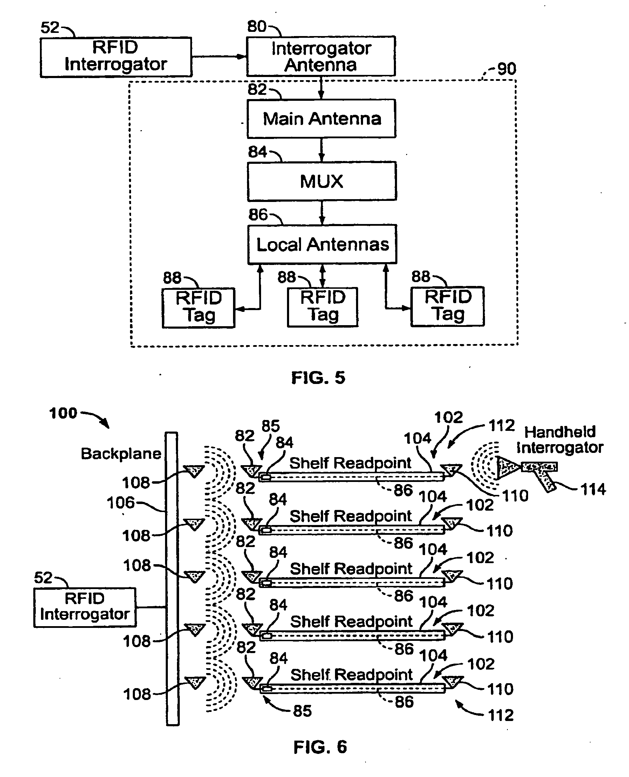

In various embodiment, the RFID interrogator 52 may include an interrogator antenna 80 as shown in Figure 5, which may comprise one or more antenna elements or coils. The interrogator antenna 80 is configured to communicate with a main antenna 82 of an RFID inventory communication system 90. The communication between the interrogator antenna 80 and the main antenna 90 may be provided through any type of wireless RFID communication link using any type of RF signals with any type of protocol. The main antenna is connected to one or more multiplexers 84 that are connected to one or more local antennas 86. The one or more local antennas 86 each communicate with one or more RFID tags 88 using any known RFID communication method.

In operation, and referring to the one or more multiplexers 84, these devices are configured as switches to control switching between the local antennas 86. The one or more multiplexers 84 operate such that the multiplexers 84 appear as passive RFID tags to the RFID interrogator 52. The RFID interrogator 52 transmits via the interrogator antenna 80 at least one of data and power to the main antenna 82. For example, a high frequency signal may transmit RFID control commands to control the switching and interrogation of the RFID tags 88 via the local antennas 86 and a low frequency signal may transmit power to the one or more multiplexers 84. Specifically, the one or more multiplexers 84 do not include a battery or other power source and when radio waves from the RFID interrogator 52 or other RFID transmitter (as is known) are detected by the main antenna 82, the energy is converted into electricity that can power up the one or more multiplexers 84. For example, a rectifier and regulator configuration may be used to derive DC power from the RF field of the RFID interrogator 52. The one or more multiplexers are then able to control, for example, switching and communication between the local antennas 86 and the RFID tags 88. The one or more multiplexers 84 may be configured in different manners. It should also be noted that the power signal from the RFID interrogator 52 also may power any passive RFID tags 88.

The one or more multiplexers 84 each include a unique identification number and may be controlled by RFID interrogator commands from the RFID interrogator 52. For example, a write command from the RFID interrogator 52 may be addressed to one or more of the multiplexers 84 to power and control the switching of the one or more multiplexers 84.

Various embodiments may be implemented in different applications to communicate using an RFID system and to acquire, for example, inventory information, which may be provided real-time or updated automatically (e.g., periodically performing interrogation of a plurality of RFID tags). An RFID shelf inventory system 100 is shown in Figure 6. The RFID shelf inventory system 100 may include a plurality of shelf read points 102 including a plurality of local antennas 86 that may be arranged in an array or matrix. The local antennas 86 may be generally aligned with items or objects (e.g., books, CDs, DVDs, etc.) to be inventoried. Each shelf read point 102 also may include one or more multiplexers 84 (shown in Figure 5) for switching between the local antennas 86 (e.g., local antennas 86 individually selected by the connected multiplexer 84) and may define a selectable array or matrix of local antennas 86. In one embodiment, the local antennas 86 may be directed upward to provide RFID communication with objects supported on a top surface 104 of the shelf read point 102 and generally forming a shelf. A main antenna 82 (e.g., near filed antenna) may be provided at an end of each of the shelf read points 102, for example, at a back end 85 to provide a near field RF connection to the RFID interrogator 52 via a backplane 106. The backplane 106 may include one or more interrogator antennas 108 that are RF coupled to the shelf read points 102 via the main antennas 82 of the shelf read points 102. More particularly, the main antennas 82 of the shelf read points 102 may be coupled to the RF path of the RFID interrogator 52 via the one or more interrogator antennas 108 of the backplane 106. For example, in a shelf type application wherein the shelf read points 102 form movable shelves, the backplane 106 may be located behind the shelves, for example, provided in connection with a mounting structure (e.g., peg board) to which the movable shelves are connected. Accordingly, the coupling of the shelf read points 104 to the RFID interrogator 52 may be provided via a wireless connection.

The various embodiments also may include additional components to provide further functionality. For example, a plurality of antennas 110, for example, near field antennas, may be provided on a front end 112 of the shelf read points 102. The plurality of antennas 110 may be configured to communicate with a mobile or handheld RFID interrogator 114, such that the handheld RFID interrogator 114 may couple to the shelf read points 102 as described herein. For example, if the RFID interrogator 52 is acquiring inventory information from shelf read points 102 forming lower shelves of a shelf display using the main antennas 82, then the RFID interrogator 112 may be used to acquire inventory information from the shelf read points 102 forming upper shelves of the shelf display using some of the corresponding antennas 110.

Further, in addition to having one or more multiplexers 84 provided in connection with each of the shelf read points 102, one or more multiplexers 84 also may be provided in connection with one or more backplanes 106. In this configuration, a plurality of backplanes 106 that may be provided in an array, may be connected to the RFID interrogator 52. For example, each backplane 106 may be provided in connection with a single shelf display unit such that the RFID interrogator 52 may acquire information from a plurality of shelf display units (e.g., a row of store display shelves).

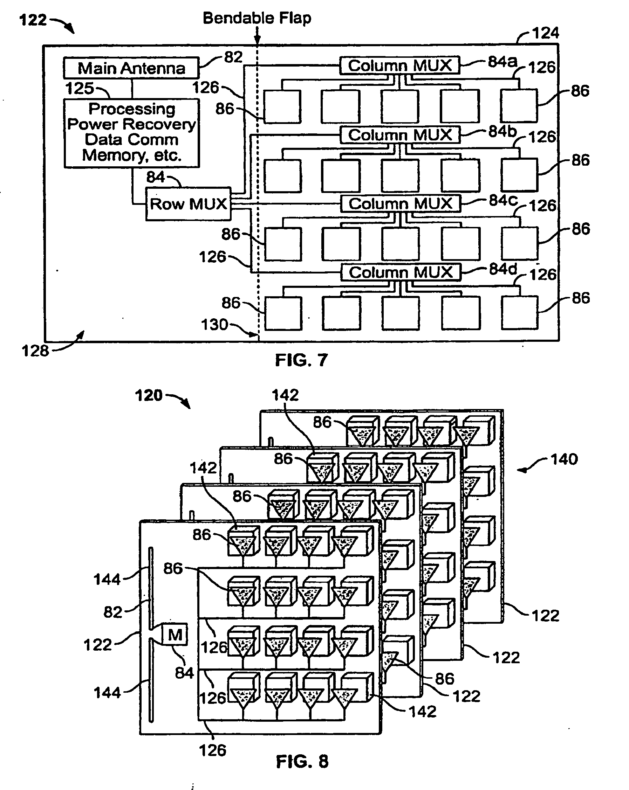

As another example, a pallet inventory system 120 is shown in Figures 7 through 9. The pallet inventory system 120 may include an interface device 122 configured to acquire information from RFID tags within, for example, containers within a case or cases forming a pallet. The interface device 122 may be, for example, a flat sheet 124, such as a planar sheet formed from corrugated paper or plastic. The interface device 122 may include the main antenna 82 in connection with the multiplexer 84, which may be configured as a controller to select between rows of local antennas 86. Additional multiplexers 84a-84d also may be provided in connection with each row of local antennas 86 to select individual local antennas 86 is a particular row. For example, the multiplexer 84 may be a control device attached to the flat sheet 124 and electrically connected to antenna feed lines. The multiplexers 84a-84d may be one or more RF multiplexers and/or switches controlled by the multiplexer 84. Alternatively, the multiplexers 84 and 84a-84d may be constructed using printed conductors and components (e.g., transistors, diodes, etc.). Optionally, the antenna patterns may be formed using printed conductors and components. Further, a processor 125 may be provided and configured to, for example, control data communications, access memory, etc.

The antennas 82 and 86, as well as feed lines and control lines 126 for the antennas 82 and 86 and the multiplexers 84 may be constructed of a metal foil or printed conductors attached to the flat sheet 124. Further, a foldable portion 128, for example, a bendable flap, may be defined by one or more fold lines 130, which may be formed by an indentation in the flat sheet 124 extending from one end of the flat sheet 124 to another end. The main antenna 82 may be positioned on the foldable portion 128.

One or more interface devices 122 may be used in connection with a pallet 140 as shown in Figure 8, for example, when the pallet 140 is assembled or packaged. For example, the interface device 122 may be inserted either vertically between columns of items 142 on the pallet 140 or horizontally between layers of items 142 on the pallet 140. It should be noted that the main antenna 82 may be formed, for example, from two elements 144 arranged in a planar orientation (e.g., dipole antenna). The interface device 122 may be positioned such that the array of local antennas 86 are generally aligned with the position of RFID tags on each case or item 142 and the main antenna 82 may be positioned at the outer edge of the pallet 140. Alternatively, for example, depending on the packaging materials or contents, each local antenna 86 in the array may be provided to communicate with RFID tags in two or more cases or items 142.

It should be noted that the interface device 122 also may be used in connection with individual cases of items. For example, in an application wherein a corrugated box contains items tagged with RFID devices, the interface devices 122 may be inserted in the case and also may be substantially aligned with the RFID devices for each item. The main antenna 82 then may be positioned at an outer edge of the case.

Accordingly, the main antenna 82, which may be, for example, a simple dipole antenna is positioned at the edge of a container, case, etc. such that the main antenna 82 may be exposed on the exterior of, for example, the pallet 140 of items. Essentially, the main antenna 82 may operate as a feed antenna. The multiplexers 84 and 84a-84d essentially operate as passive RFID transponders and include the functionality to control the selection of individual antennas in an array of antennas, for example, the local antennas 86. The multiplexers 84 and 84a-84d receive power via the main antenna 82 from the RF signal of RFID interrogator 52, and may respond to the RFID interrogator 52 with a unique ID. The multiplexers 84 and 84a-84d may select, for example, another multiplexer, an antenna and/or an array of antennas based on a write command from the RFID interrogator 52. The array of local antennas 86 may be formed from RF antennas and controlled by RF multiplexers. The position of the local antennas 86 and the geometry of the local antennas 86 (e.g., matrix shape or size) may be modified based on, for example, the packaging layout and/or contents.

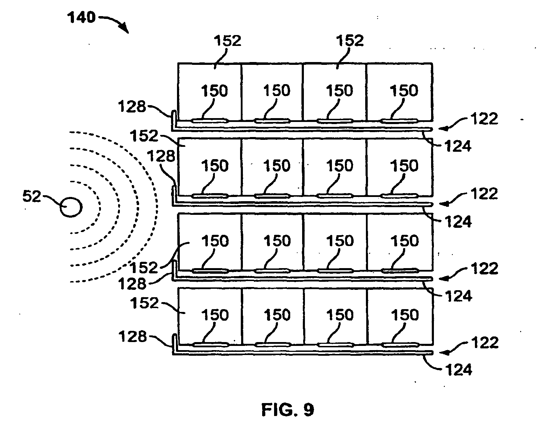

Thus, as shown in Figure 9, the RF interrogator 52 may acquire information from RFID tags 150 within the pallet 140 (shown from a top view) using the interface devices 122 with the foldable portion 128 bent, for example, at about ninety degrees relative to the base flat sheet 124. Essentially, the interface devices 122 are inserted between stacks of cases 152 on the pallet 140. As should be appreciated, with the foldable portion 128 exposed from the pallet 140, RF energy from the RFID interrogator 52 (and the resulting backscatter from the RFID tags 150) may be routed individually to each of the RFID tags 150 in the pallet 140 using the multiplexer 84 and multiplexers 84a-84d (shown in Figure 7). Essentially, the main antennas 82 (shown in Figures 7 and 8) operate as pick up antennas. Accordingly, because the energy is routed through the conducted paths in each of the interface devices 122, the energy is not blocked or shielded by the packaging materials or contents.

In operation, the RFID interrogator may wirelessly acquire information from RFID tags connected to or integrated with items that may be located in cases within a pallet using one or more multiplexers. One or more antennas associated with the one or more multiplexers may be selectively activated using RF power from an RF signal of the RFID interrogator (e.g., interrogator signal). The RF signal also may provide power for the one or more multiplexers. Using the various embodiments, which may be configured in different arrangements, information from RFID tags otherwise blocked by packaging or items within a pallet may be acquired.

Thus, various embodiments of the invention may provide an inventory, for example, a perpetual RFID shelf inventory, wherein communication to perform the inventory is provided wirelessly. The power for the controllers, such as multiplexers, to interrogate the RFID tags is supplied by the RF signal from the RFID interrogator. The RFID interrogator also wirelessly activates selected local antennas to perform RFID inventory operations to identify, for example, item IDs and location (e.g., location within a rack or shelf unit).

The various embodiments or components, for example, the RFID system and components therein, or the RFID interrogator and the components therein, may be implemented as part of one or more computer systems. The computer system may include a computer, an input device, a display unit and an interface, for example, for accessing the Internet. The computer may include a microprocessor. The microprocessor may be connected to a communication bus. The computer may also include a memory. The memory may include Random Access Memory (RAM) and Read Only Memory (ROM). The computer system further may include a storage device, which may be a hard disk drive or a removable storage drive such as a floppy disk drive, optical disk drive, and the like. The storage device may also be other similar means for loading computer programs or other instructions into the computer system.

As used herein, the term "computer" may include any processor-based or microprocessor-based system including systems using microcontrollers, reduced instruction set circuits (RISC), application specific integrated circuits (ASICs), logic circuits, and any other circuit or processor capable of executing the functions described herein. The above examples are exemplary only, and are thus not intended to limit in any way the definition and/or meaning of the term "computer".

The computer system executes a set of instructions that are stored in one or more storage elements, in order to process input data. The storage elements may also store data or other information as desired or needed. The storage element may be in the form of an information source or a physical memory element within the processing machine.

The set of instructions may include various commands that instruct the computer as a processing machine to perform specific operations such as the methods and processes of the various embodiments of the invention. The set of instructions may be in the form of a software program. The software may be in various forms such as system software or application software. Further, the software may be in the form of a collection of separate programs, a program module within a larger program or a portion of a program module. The software also may include modular programming in the form of objects-oriented programming. The processing of input data by the processing machine may be in response to user commands, or in response to results of previous processing, or in response to a request made by another processing machine.

As used herein, the terms "software" and "firmware" are interchangeable, and include any computer program stored in memory for execution by a computer, including RAM memory, ROM memory, EPROM memory, EEPROM memory, and non-volatile RAM (NVRAM) memory. The above memory types are exemplary only, and are thus not limiting as to the types of memory usable for storage of a computer program.

While the invention has been described in terms of various specific embodiments, those skilled in the art will recognize that the various embodiments of the invention can be practiced with modification within the scope of the claims.

## Claims

1. A radio frequency identification RFID interface device comprising:
a plurality of multiplexers (84, 84a-d);
a plurality of local antennas (86) connected to the plurality of multiplexers (84, 84a-d) and configured to communicate with RFID tags (60, 70, 88, 150);
**characterized in that**
a movable main antenna (82) in connection with the plurality of local antennas (86) and configured to receive RF power from an interrogator (52, 114) to power the plurality of multiplexers (84, 84a-d).

2. An RFID interface device in accordance with claim 1 further comprising a flat sheet supporting (124) the plurality of multiplexers (84, 84a-d), plurality of local antennas (86) and main antenna (82), the flat sheet (124) formed from one of paper and plastic.

3. An RFID interface device in accordance with claim 2 wherein the flat sheet (124) is configured to be positioned between cases in a pallet (140) such that the main antenna (82) is in an exposed position.

4. A radio frequency identification RFID system (50, 100, 120) comprising:
a RFID interface device according to claim 1;
an RFID interrogator (52, 114);
at least one interrogator antenna (64, 80, 110);
at least one local antenna (86) configured to communicate with RFID tags (60, 70, 88, 150); and
a multiplexer (84, 84a-d) connected to the at least one local antenna (86) and configured to receive power from an RF signal (74) generated by the RFID interrogator (52, 114) and transmitted wirelessly from the interrogator antenna (64, 80, 110).

5. An RFID system (50, 100, 120) in accordance with claim 4 wherein the multiplexer (84, 84a-d) is activated by a write command transmitted by the RFID interrogator (52, 114).

6. An RFID system (50, 100, 120) in accordance with claim 5 further comprising a near field antenna in connection with the multiplexer (84, 84a-d) and configured to receive the RF signal (74).

7. An RFID system (50, 100, 120) in accordance with claim 6 further comprising a second near field antenna in connection with the multiplexer (84, 84a-d) and configured to receive an RF signal (74) from a second RFID interrogator (52, 114).

8. An RFID system (50, 100, 120) in accordance with claim 7 wherein the second RFID interrogator (52, 114) is a mobile unit.

9. An RFID system (50, 100, 120) in accordance with claim 4 wherein the multiplexer (84, 84a-d) is connected to a plurality of local antennas (86) selectively activated by the multiplexer (84, 84a-d) based on received control commands from the RFID interrogator (52, 114).

10. An RFID system (50, 100, 120) in accordance with claim 9 wherein the control command is transmitted using a high frequency signal and the RP signal providing power is transmitted using a low frequency signal.

11. An RFID system (50, 100, 120) in accordance with claim 4 further comprising a backplane (106) in connection with the RFID interrogator (52, 114) and comprising a plurality of interrogator antennas (64, 80, 110).

12. An RFID system (50, 100, 120) in accordance with claim 4 further comprising a shelf read point (102) defining a shelf of a display and including a plurality of local antennas (86).

13. An RFID system (50, 100, 120) in accordance with claim 4 further comprising a plurality of multiplexers (84, 84a-d) selectively activated by the RFID interrogator (52, 114) to control a matrix of local antennas (86).

14. An RFID system (50, 100, 120) in accordance with claim 4 wherein the at least one local antenna (86) is substantially aligned with at least one RFID tag (60, 70, 88, 150).

15. A radio frequency identification RFID system comprising a RFID device in accordance with claim 1 further comprising:
at least one multiplexer (84, 84a-d) configured to appear to an RFID interrogator (52, 114) as a passive RFID tag (60, 70, 88, 150) and configured to receive power from an RF signal (74) of the RFID interrogator (52, 114); and
a multiplexed antenna array configured to communicate with a plurality of RFID tags (60, 70, 88, 150), each of the antennas in the multiplexed array configured to be selectively activated by the at least one multiplexer (84, 84a-d).

## Patentansprüche

1. Schnittstellenvorrichtung zur Radiofrequenzidentifikation RFID, umfassend:
eine Vielzahl von Multiplexern (84, 84a bis d);
eine Vielzahl von lokalen Antennen (86), die an die Vielzahl von Multiplexern (84, 84a bis d) angeschlossen sind und konfiguriert sind, um mit RFID-Etiketten (60, 70, 88, 150) zu kommunizieren;
**gekennzeichnet durch**
eine mobile Hauptantenne (82) in Verbindung mit der Vielzahl von lokalen Antennen (86) und konfiguriert, um RF-Energie von einem Abfragesender (52, 114) zu empfangen, um die Vielzahl von Multiplexern (84, 84a bis d) mit Energie zu versorgen.

2. RFID-Schnittstellenvorrichtung nach Anspruch 1, ferner umfassend eine Flachfolie (124), welche die Vielzahl von Multiplexern (84, 84a bis d), die Vielzahl von lokalen Antennen (86) und die Hauptantenne (82) trägt, wobei die Flachfolie (124) entweder aus Papier oder aus Kunststoff gebildet ist.

3. RFID-Schnittstellenvorrichtung nach Anspruch 2, wobei die Flachfolie (124) konfiguriert ist, um zwischen Kisten auf einer Palette (140) angeordnet zu werden, so dass die Hauptantenne (82) sich in einer freien Position befindet.

4. System zur Radiofrequenzidentifikation RFID (50, 100, 120), umfassend:
eine RFID-Schnittstellenvorrichtung nach Anspruch 1;
einen RFID-Abfragesender (52, 114);
mindestens eine Abfrageantenne (64, 80, 110);
mindestens eine lokale Antenne (86), die konfiguriert ist, um mit RFID-Etiketten (60, 70, 88, 150) zu kommunizieren; und
einen Multiplexer (84, 84a bis d), der an die mindestens eine lokale Antenne (86) angeschlossen ist und konfiguriert ist, um Energie von einem RF-Signal (74) zu empfangen, das von dem RFID-Abfragesender (52, 114) erzeugt wird und von der Abfrageantenne (64, 80, 110) drahtlos übertragen wird.

5. RFID-System (50, 100, 120) nach Anspruch 4, wobei der Multiplexer (84, 84a bis d) durch einen Schreibbefehl aktiviert wird, der von dem RFID-Abfragesender (52, 114) übertragen wird.

6. RFID-System (50, 100, 120) nach Anspruch 5, ferner umfassend eine Nahfeldantenne, die mit dem Multiplexer (84, 84a bis d) in Verbindung steht und konfiguriert ist, um das RF-Signal (74) zu empfangen.

7. RFID-System (50, 100, 120) nach Anspruch 6, ferner umfassend eine zweite Nahfeldantenne, die mit dem Multiplexer (84, 84a bis d) in Verbindung steht und konfiguriert ist, um ein RF-Signal (74) eines zweiten RFID-Abfragesenders (52, 114) zu empfangen.

8. RFID-System (50, 100, 120) nach Anspruch 7, wobei der zweite RFID-Abfragesender (52, 114) eine Mobileinheit ist.

9. RFID-System (50, 100, 120) nach Anspruch 4, wobei der Multiplexer (84, 84a bis d) an eine Vielzahl von lokalen Antennen (86) angeschlossen ist, die von dem Multiplexer (84, 84a bis d) auf der Basis von Steuerbefehlen, die von dem RFID-Abfragesender (52, 114) empfangen werden, selektiv aktiviert werden.

10. RFID-System (50, 100, 120) nach Anspruch 9, wobei der Steuerbefehl unter Verwendung eines Hochfrequenzsignals übertragen wird und das Energie bereitstellende RF-Signal unter Verwendung eines Niederfrequenzsignals übertragen wird.

11. RFID-System (50, 100, 120) nach Anspruch 4, ferner umfassend eine Rückwand (106), die in Verbindung mit dem RFID-Abfragesender (52, 114) steht und eine Vielzahl von Abfrageantennen (64, 80, 110) umfasst.

12. RFID-System (50, 100, 120) nach Anspruch 4, ferner umfassend einen Regallesepunkt (102), der ein Regal einer Regalauslage definiert und eine Vielzahl von lokalen Antennen (86) umfasst.

13. RFID-System (50, 100, 120) nach Anspruch 4, ferner umfassend eine Vielzahl von Multiplexern (84, 84a bis d), die von dem RFID-Abfragesender (52, 114) selektiv aktiviert werden, um eine Matrix von lokalen Antennen (86) zu steuern.

14. RFID-System (50, 100, 120) nach Anspruch 4, wobei die mindestens eine lokale Antenne (86) im Wesentlichen auf mindestens ein RFID-Etikett (60, 70, 88, 150) ausgerichtet ist.

15. System zur Radiofrequenzidentifikation RFID, umfassend eine RFID-Vorrichtung nach Anspruch 1, ferner umfassend:
mindestens einen Multiplexer (84, 84a bis d), der konfiguriert ist, um für einen RFID-Abfragesender (52, 114) wie ein passives RFID-Etikett (60, 70, 88, 150) auszusehen, und konfiguriert ist, um Energie von einem RF-Signal (74) des RFID-Abfragesenders (52, 114) zu empfangen; und
eine Multiplex-Antennenanordnung, die konfiguriert ist, um mit einer Vielzahl von RFID-Etiketten (60, 70, 88, 150) zu kommunizieren, wobei jede der Antennen in der Multiplexanordnung konfiguriert ist, um von dem mindestens einen Multiplexer (84, 84a bis d) selektiv aktiviert zu werden.

## Revendications

1. Dispositif d'interface pour identification par radiofréquence RFID, comprenant :
une pluralité de multiplexeurs (84, 84a à d) ;
une pluralité d'antennes locales (86) connectées à la pluralité de multiplexeurs (84, 84a à d) et configurées pour communiquer avec des étiquettes RFID (60, 70, 88, 150) ;
**caractérisé par**
une antenne principale mobile (82) en connexion avec la pluralité d'antennes locales (86) et configurée pour recevoir de l'énergie RF d'un interrogateur (52, 114) pour alimenter la pluralité de multiplexeurs (84, 84a à d).

2. Dispositif d'interface RFID selon la revendication 1, comprenant en outre une feuille à plat (124) supportant la pluralité de multiplexeurs (84, 84a à d), la pluralité d'antennes locales (86) et l'antenne principale (82), la feuille à plat (124) étant formée de papier ou de plastique.

3. Dispositif d'interface RFID selon la revendication 2, dans lequel la feuille à plat (124) est configurée pour être positionnée entre des caisses sur une palette (140) de sorte que l'antenne principale (82) se trouve dans une position exposée.

4. Système d'identification par radiofréquence RFID (50, 100, 120), comprenant :
un dispositif d'interface RFID selon la revendication 1 ;
un interrogateur RFID (52, 114) ;
au moins une antenne d'interrogation (64, 80, 110) ;
au moins une antenne locale (86) configurée pour communiquer avec des étiquettes RFID (60, 70, 88, 150) ; et
un multiplexeur (84, 84a à d) connecté à ladite au moins une antenne locale (86) et configuré pour recevoir de l'énergie d'un signal RF (74) généré par l'interrogateur RFID (52, 114) et transmis sans fil à partir de l'antenne d'interrogation (64, 80, 110).

5. Système RFID (50, 100, 120) selon la revendication 4, dans lequel le multiplexeur (84, 84a à d) est activé par un ordre d'écriture transmis par l'interrogateur RFID (52, 114).

6. Système RFID (50, 100, 120) selon la revendication 5, comprenant en outre une antenne en champ proche en connexion avec le multiplexeur (84, 84a à d) et configurée pour recevoir le signal RF (74).

7. Système RFID (50, 100, 120) selon la revendication 6, comprenant en outre une deuxième antenne en champ proche en connexion avec le multiplexeur (84, 84a à d) et configurée pour recevoir un signal RF (74) d'un deuxième interrogateur RFID (52, 114).

8. Système RFID (50, 100, 120) selon la revendication 7, dans lequel le deuxième interrogateur RFID (52, 114) est une unité mobile.

9. Système RFID (50, 100, 120) selon la revendication 4, dans lequel le multiplexeur (84, 84a à d) est connecté à une pluralité d'antennes locales (86) activées sélectivement par le multiplexeur (84, 84a à d) sur la base d'ordres de commande provenant de l'interrogateur RFID (52, 114).

10. Système RFID (50, 100, 120) selon la revendication 9, dans lequel l'ordre de commande est transmis en utilisant un signal haute fréquence et le signal RF fournissant de l'énergie est transmis en utilisant un signal basse fréquence.

11. Système RFID (50, 100, 120) selon la revendication 4, comprenant en outre un panneau arrière (106) en connexion avec l'interrogateur RFID (52, 114) et comprenant une pluralité d'antennes d'interrogation (64, 80, 110).

12. Système RFID (50, 100, 120) selon la revendication 4, comprenant en outre un point de lecture d'étagère (102) définissant une étagère d'un présentoir et comprenant une pluralité d'antennes locales (86).

13. Système RFID (50, 100, 120) selon la revendication 4, comprenant en outre une pluralité de multiplexeurs (84, 84a à d) activés sélectivement par l'interrogateur RFID (52, 114) pour commander une matrice d'antennes locales (86).

14. Système RFID (50, 100, 120) selon la revendication 4, dans lequel ladite au moins une antenne locale (86) est substantiellement alignée sur au moins une étiquette RFID (60, 70, 88, 150).

15. Système d'identification par radiofréquence RFID, comprenant un dispositif RFID selon la revendication 1, comprenant en outre :
au moins un multiplexeur (84, 84a à d) configuré pour se présenter à un interrogateur RFID (52, 114) comme une étiquette RFID passive (60, 70, 88, 150) et configuré pour recevoir de l'énergie d'un signal RF (74) de l'interrogateur RFID (52, 114) ; et
un réseau d'antennes multiplexé configuré pour communiquer avec une pluralité d'étiquettes RFID (60, 70, 88, 150), chacune des antennes dans le réseau multiplexé étant configurée pour être activée sélectivement par ledit au moins un multiplexeur (84, 84a à d).
